# EUROPÄISCHE PATENTSCHRIFT

(11) **EP 1 840 505 B1**
(45) Veröffentlichungstag und Bekanntmachung des Hinweises auf die Patenterteilung: **05.01.2011**
(21) Anmeldenummer: 06006822.8
(22) Anmeldetag: 31.03.2006
(51) Int. Cl.: G01B 21/14, B29C 47/00

(54) **Mess-Gerät zur Erfassung des Verschleiss-Zustandes von Bohrungen von Schnecken-Extrudern**
Measuring device for the determination of the wear state of wells of screw extruders
Dispositif de mesure pour la détermination de l'état d'usure de puits d'extrudeuses à vis

(43) Veröffentlichungstag der Anmeldung: 03.10.2007
(73) Patentinhaber: Coperion GmbH, 70469 Stuttgart (DE)
(72) Erfinder: Munz, Rainer, Dipl.-Ing., 71540 Murrhardt (DE)
(74) Vertreter: Rau, Manfred

(56) Entgegenhaltungen:
- WO-A-95/03526
- US-B1- 6 249 007
- PATENT ABSTRACTS OF JAPAN Bd. 2003, Nr. 12, 5. Dezember 2003 (2003-12-05) & JP 2006 029865 A (SANKYU INC), 2. Februar 2006 (2006-02-02)
- PATENT ABSTRACTS OF JAPAN Bd. 2003, Nr. 12, 5. Dezember 2003 (2003-12-05) & JP 2004 098444 A (TOSHIBA MACH CO LTD), 2. April 2004 (2004-04-02)

## Beschreibung

Die Erfindung betrifft ein Mess-Gerät zur Erfassung des Verschleiß-Zustandes der Bohrungs-Wände von zwei einander durchdringenden, zueinander parallele Bohrungs-Achsen aufweisenden Gehäuse-Bohrungen von mindestens zweiwelligen Schnecken-Extrudern.

Zwei- und mehrwellige Schnecken-Extruder gibt es in stark unterschiedlichen Baugrößen, nämlich von kleinsten Labormaschinen mit Bohrungs-Durchmessern im Bereich von 15 bis 20 mm bis zu Großmaschinen mit Bohrungs-Durchmessern von bis zu 400 mm. Die sich in den Gehäuse-Bohrungen drehenden Schnecken erzeugen zusammen mit dem dort verarbeiteten bzw. behandelten Material Verschleiß an den Bohrungs-Wänden. Daraus resultieren Durchmesser-Veränderungen an den Gehäuse-Bohrungen und an den Schnecken. Während die Schnecken von Zeit zu Zeit gezogen, gereinigt und gegebenenfalls vermessen werden, ist das Erfassen des Verschleißes der Bohrungs-Wände schwierig. In der Praxis müssen hierzu die in der Regel aus einzelnen Gehäuseschüssen aufgebauten Gehäuse völlig demontiert werden.

Mit bekannten mechanischen Messtastern ist das Vermessen der Gehäuse-Bohrungen in montiertem Zustand der Extruder-Gehäuse sehr schwierig, da die Taster in Einlauf- und Entgasungsöffnungen hängen bleiben können. Die jeweiligen Messebenen und die jeweiligen Messpunkte am Umfang sind oft nicht eindeutig definierbar. Darüber hinaus sind Messfehler aufgrund von Materialresten an den Bohrungs-Wänden unvermeidbar.

Es sind weiterhin fahrbare zylindrische Bohrungs-Messköpfe mit jeweils zwei kapazitiven Wegmess-Sensoren bekannt, die nur einen engen begrenzten Messbereich haben, so dass angenähert für jede Extruder-Baugröße ein eigener Messkopf erforderlich ist. Weiterhin kann nur jeweils eine Gehäuse-Bohrung vermessen werden. Bei jedem Messdurchgang durch die Gehäuse-Bohrung kann die Messung nur in einer vorgegebenen Winkelstellung zur Bohrungs-Achse vorgenommen werden. Daher ist für jede Gehäuse-Bohrung eine größere Zahl von Messdurchgängen erforderlich.

Aus der JP 2004-098 444 A ist ein Mess-Gerät zur Erfassung des Verschleiß-Zustandes der Bohrungs-Wände von zwei einander durchdringenden, zueinander parallele Bohrungs-Achsen aufweisenden Gehäuse-Bohrungen von zweiwelligen Schnecken-Extrudern bekannt. Dieses Mess-Gerät weist eine Führung auf, die beiderseits der Durchdringungsstelle der Gehäuse-Bohrungen auf der jeweiligen Bohrungs-Wand aufsitzt und gleitet. Die Führung wird hierbei gegenüber der Durchdringungsstelle der beiden Gehäuse-Bohrungen an ein Entfernungs-Messgerät montiert, das in der Mittelebene der beiden einander durchdringenden Gehäuse-Bohrungen mit einem Taster gegen eine Bohrungs-Wand angelegt wird, wobei mittelbar deren Abstand von der Bohrungs-Achse gemessen wird.

Aus der JP 2006-029 865 A ist ein Mess-Gerät zur Erfassung des Verschleiß-Zustandes der Bohrungs-Wände von zwei einander durchdringenden, zueinander parallele Bohrungs-Achsen aufweisenden Gehäuse-Bohrungen von mindestens einwelligen Schnecken-Extrudern bekannt. Ein Gestell dieses Mess-Geräts liegt über Rollen an der Bohrungs-Wand an. Außerdem ist ein Entfernungsmesser vorgesehen, der den Abstand der Bohrungs-Wand von der Achse des Gerätes misst. Dieses Gerät ist nicht vielseitig einsetzbar.

Aus der WO 95/03526 A1 ist ein Inspektions-Gerät für Rohrleitungen bekannt. Dieses weist ein selbstfahrendes Gestell mit vorderen und hinteren Führungsrädern und ein um 360° schwenkbares Messgerät auf, das den Zustand der Rohrleitungs-Wand erfasst.

Aus der US 6,249,007 B1 ist ein fahrbares Mess-Gerät zum kontaktfreien Messen des Abstandes zwischen einem an dem Mess-Gerät angebrachten Entfernungsmesser und einer Rohrleitungs-Wand bekannt. Hierdurch sollen Leitungsbrüche oder dergleichen erfasst werden.

Der Erfindung liegt die Aufgabe zugrunde, ein Mess-Gerät der allgemeinen Gattung zu schaffen, mit dem in einem Durchgang die vollständige Ist-Geometrie von zwei Bohrungs-Wänden erfasst werden kann.

Diese Aufgabe wird erfindungsgemäß durch die Merkmale des Anspruches 1 gelöst. Die beiden Abstands-Sensoren befinden sich in einer gemeinsamen Messebene. Bei einer kontinuierlichen Vorfahrt des Mess-Gerätes wird das gesamte Profil der Bohrungs-Wände etwa nach Art einer Teil-Schraubenlinie, jeweils von Zwickel zu Zwickel, erfasst. Andererseits können einzelne Messebenen angefahren und dann exakt vermessen werden. Es ist eine besonders einfache Anpassung an unterschiedliche Bohrungs-Durchmesser der Bohrungen des Extruder-Gehäuses bzw. an unterschiedliche Achs-Abstände der Bohrungen möglich.

Der Aufbau des Mess-Geräts in Form von Modulen entsprechend den Ansprüchen 2 und 3 ermöglicht einen besonders einfachen Aufbau des Mess-Geräts. Durch die Weiterbildungen nach den Ansprüchen 4 und 5 wird die besonders einfache Anpassung an unterschiedliche Bohrungs-Durchmesser der Bohrungen des Extruder-Gehäuses bzw. an unterschiedliche Achs-Abstände der Bohrungen noch verbessert.

Durch die Weiterbildung nach Anspruch 6 wird eine einfache Zentrierung der Führungs-Räder und damit des Mess-Geräts in den Bohrungen erreicht.

Die Weiterbildungen nach den Ansprüchen 7 und 8 geben wieder, wie die Messwerte erfasst werden.

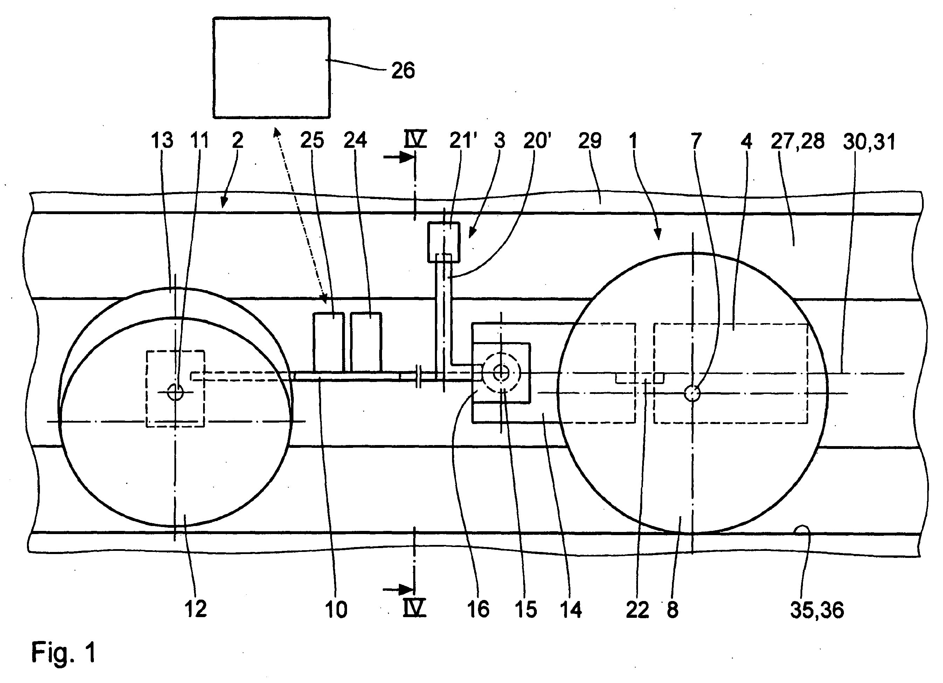

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: ein Mess-Gerät nach der Erfindung in einer Seiten-Längs- Ansicht in schematischer Darstellung,

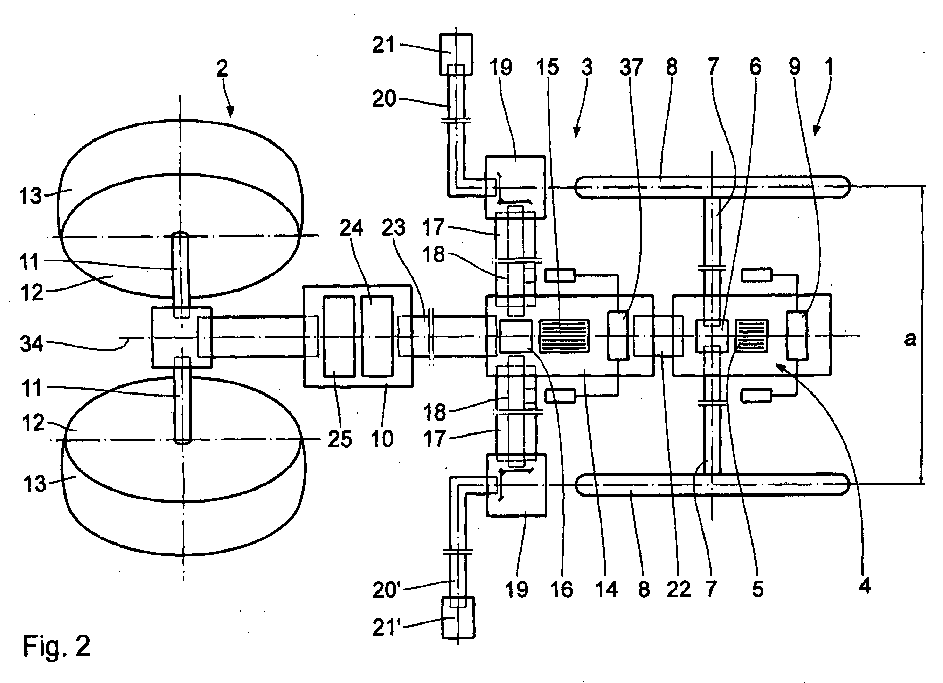

- Fig. 2: eine Draufsicht auf das Mess-Gerät,
- Fig. 3: eine Stirnansicht, die primär die Räder des Mess-Geräts zeigt und
- Fig. 4: einen Querschnitt gemäß der Schnittlinie IV-IV in Fig. 1 durch das Mess-Gerät.

Das in der Zeichnung dargestellte Mess-Gerät besteht in seinem Grundaufbau aus drei Modulen, nämlich einem hinteren Antriebs-Modul 1, einem vorderen Führungs-Modul 2 und einem mittleren Sensor-Modul 3.

Der Antriebs-Modul 1 weist eine zentrale Antriebs-Einheit 4 auf, die einen Elektro-Motor als Antriebs-Motor 5 und ein diesem nachgeordnetes Untersetzungs- und Differenzial-Getriebe 6 aufweist. Aus dem Getriebe 6 sind hintere Antriebs-Achsen 7 herausgeführt, an deren äußeren Enden Antriebs-Räder 8 angebracht sind. Die Achsen 7 können in das Getriebe 6 eingesteckt werden, oder auf andere Weise verlängerbar ausgebildet sein, so dass die Spurweite a der Antriebs-Räder 8 durch entsprechende Verlängerung der Achsen 7 veränderbar ist. Mit dem Austausch bzw. der Verlängerung der Achsen 7 werden auch die Antriebs-Räder 8 ausgetauscht und jeweils durch Räder unterschiedlichen Durchmessers b ersetzt. Die Antriebs-Einheit 4 weist weiterhin eine Weg-Mess-Einrichtung 9 auf, die in üblicher Weise pro Umdrehung jeder Achse 7 eine große Zahl von Signalen, üblicherweise also 512 Signale, abgibt, woraus zusammen mit dem jeweiligen Durchmesser b der Antriebs-Räder 8 der zurückgelegte Weg bestimmt werden kann.

Der Führungs-Modul 2 weist ein Grundgestell 10 auf, an dem Vorder-Achsen 11 angebracht sind, die an ihren freien Enden jeweils ein Führungs-Rad 12 aufweisen. Damit auch deren Spurweite veränderbar ist, sind die Vorder-Achsen 11 entweder steckbar am Grundgestell 10 befestigt, oder aber verlängerbar ausgebildet.

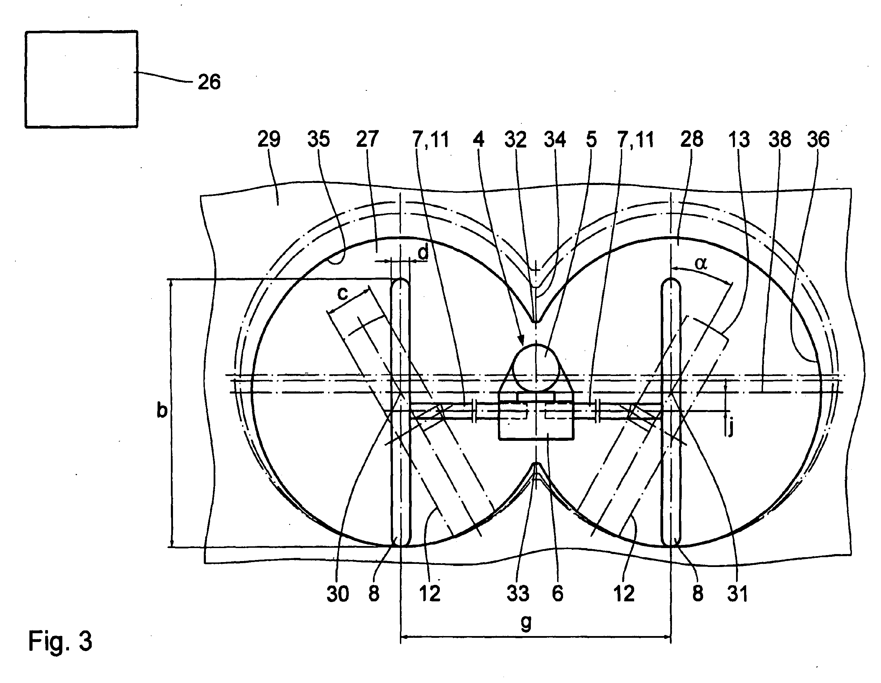

Wie Fig. 3 entnehmbar ist, ist die Breite c der Führungs-Räder 12 deutlich größer als die Breite d der Antriebs-Räder 8. Wie ebenfalls Fig. 3 entnehmbar ist, sind die Antriebs-Räder 8 parallel zueinander angeordnet. Demgegenüber sind die Führungs-Räder 12 gegenüber den Antriebs-Rädern 8 um einen Sturz-Winkel α geneigt, so dass ihre Unterseite sich jeweils zwischen den Antriebs-Rädern 8 befindet. Der Sturz-Winkel α ist für beide Führungs-Räder 12 gleich. Die Lauf-Fläche 13 der Führungs-Räder 12 ist gekrümmt. Anstelle eines Sturz-Winkels α können die Führungs-Räder auch einen Spur-Winkel aufweisen, d. h. sie können nach vorne aufeinander zu angestellt sein. Die Räder 8 und 12 sind bevorzugt gummibereift.

Der Sensor-Modul 3 weist eine Grundplatte 14 auf, an der ein Elektro-Motor als Schwenk-Antrieb 15 und ein Untersetzungs- und Verteilergetriebe 16 angeordnet sind. Am Getriebe 16 sind Tragrohre 17 steckbar angebracht, in denen jeweils eine Welle 18 angeordnet ist. An den äußeren Enden der Tragrohre 17 ist jeweils ein Winkel-Getriebe 19 angebracht, in das die jeweilige Welle 18 geführt ist. Am Abtrieb jedes Winkel-Getriebes 19 ist ein Schwenkarm 20, 20' um 360° drehbar angebracht, der von dem Motor 15 über die Welle 18 und das Getriebe 19 angetrieben wird. Am jeweiligen äußeren Ende jedes Schwenkarms 20, 20' ist ein Abstands-Sensor 21, 21' angebracht. Die Tragrohre 17 mit den Wellen 18 sind steckbar äusgebildet und damit jeweils austauschbar. In gleicher Weise sind auch die Schwenkarme 20, 20' aufsteckbar und damit austauschbar.

Der Antriebs-Modul 1 ist mit dem Sensor-Modul 3 über ein lösbares und austauschbares Verbindungs-Teil 22 verbunden. Entsprechend ist der Sensor-Modul 3 mit dem Führungs-Modul 2 mittels eines austauschbaren Verbindungs-Teils 23 verbunden.

Auf dem Grundgestell 10 des Führungs-Moduls 2 ist eine Strom-Versorgungs-Einheit 24 angeordnet, über die die Motoren 5 und 15 mit Strom versorgt werden. Sie besteht also im Wesentlichen aus einem Akku. Selbstverständlich ist es auch möglich, die Versorgung der Motoren 5 und 15 mit elektrischem Strom über nachgeführte, nicht dargestellte elektrische Leitungen vorzunehmen. Auf dem Grundgestell 10 des Führungs-Moduls befindet sich weiterhin eine Funk-Steuer-Einheit 25, die einerseits die erzeugten Messdaten in Form von Signalen an eine zentrale Bedien- und Steuer-Einheit 26 weitergibt und die auch die erforderlichen Steuerdaten an die Motoren 5 und 15 gibt.

Das Mess-Gerät wird zum Vermessen der Durchmesser e bzw. f der Bohrungen 27, 28 in einem Extruder-Gehäuse 29 verwendet. Die Bohrungen 27, 28 weisen zueinander parallele Achsen 30, 31 auf und durchdringen einander unter Bildung von Zwickeln 32, 33, so dass der Abstand g der Achsen 30, 31 voneinander kleiner ist als e bzw. f, wobei naturgemäß bei ordnungsgemäßem Zustand des Gehäuses 29 e und f identisch sind. Die kurz geschilderte Geometrie eines Extruder-Gehäuses 29 ist in der Praxis allgemein üblich, so dass sie keiner weiteren Erörterungen bedarf. Anstelle von zwei Bohrungen 27, 28 können auch drei oder mehr Bohrungen nebeneinander angeordnet sein, wobei die Achsen 30, 31 jeweils in einer gemeinsamen horizontalen Ebene angeordnet sind.

Während der Vorfahrt längs durch ein Extruder-Gehäuse 29 erfolgt der Antrieb des Mess-Geräts über den Antriebs-Modul 1, wobei - ausgehend vom Anfang der Bohrungen 27, 28 - mittels der Weg-Mess-Einrichtung 9 der zurückgelegte Weg und damit auch der jeweilige Ort des Mess-Geräts exakt erfasst wird. Wie Fig. 3 entnehmbar ist, entspricht die Spurweite a der Antriebs-Räder exakt dem Achs-Abstand g der Bohrungen 27, 28.

Die Führung und Zentrierung des Mess-Gerätes in der Weise, dass es genau spiegelsymmetrisch zu einer durch die Zwickel 32, 33 gelegten MittelEbene 34 angeordnet ist, erfolgt über die gegenüber der Vertikalen geneigten Führungs-Räder 12, deren Lauf-Flächen 13 an den Zwickeln 32, 33 anliegen, wie Fig. 3 entnehmbar ist. Die Krümmung der Lauf-Flächen 13 entspricht der Krümmung der jeweiligen Bohrungs-Wand 35, 36. Die Führung und Zentrierung kann - wie oben ausgeführt - nicht nur durch einen entsprechenden Sturz-Winkel α, sondern auch durch einen entsprechenden Spur-Winkel der Führungs-Räder 12 erreicht werden.

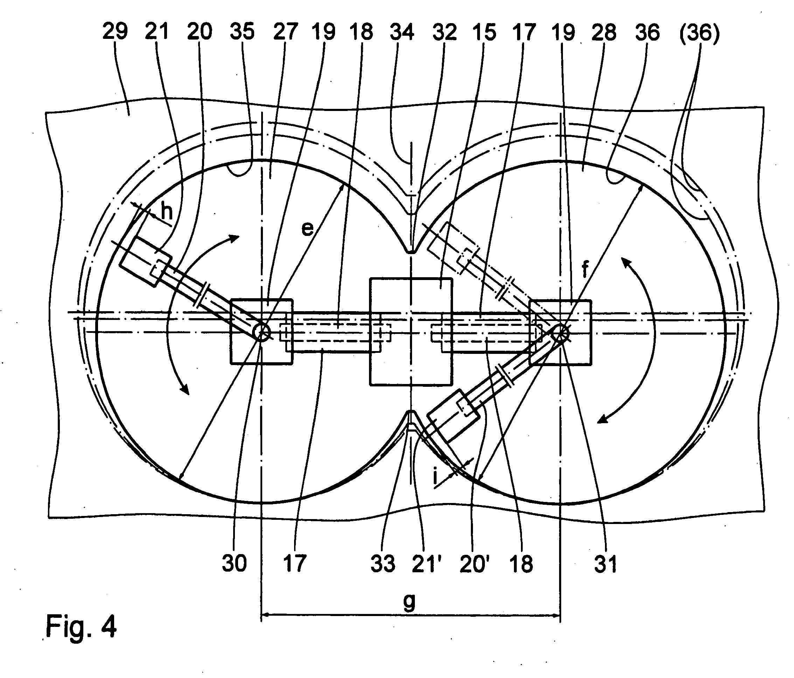

Die Schwenkarme 20, 20' mit den Abstands-Sensoren 21, 21' werden während der Vorwärtsfahrt gegensinnig geschwenkt, und zwar jeweils entsprechend den Doppel-Richtungspfeilen in Fig. 4 von Zwickel 32 zu Zwickel 33 und umgekehrt jeweils entlang der Bohrungs-Wand 35 bzw. 36. Hierbei erfassen die Abstands-Sensoren 21, 21' jeweils den Abstand h bzw. i zur Bohrungs-Wand 35 bzw. 36. Da die Schwenk-Achsen der Schwenk-Arme 20, 20' koaxial zu den Achsen 30 bzw. 31 der Bohrungen 27, 28 verlaufen, werden hierüber Änderungen des Bohrungs-Durchmessers e bzw. f erfasst. Da auch der Sensor-Modul 3 mit einem Positions-Geber 37 versehen ist, der fortlaufend bei jeder Schwenkbewegung der Schwenkarme 20, 20' eine Vielzahl von Signalen abgibt, kann eine exakte Vermessung des Durchmesser e bzw. f der Bohrungen 27, 28 über den Umfang der jeweiligen Bohrungs-Wand 35 bzw. 36 und zusammen mit der Weg-Mess-Einrichtung 9 über die Länge der Bohrungen 27, 28 vorgenommen werden. Es kann also exakt die Ist-Geometrie der Bohrungen 27, 28 erfasst werden. Die Messwerte werden über die Funk-Steuer-Einheit 25 an die zentrale Bedien- und Steuer-Einheit 26 weitergegeben.

Wie sich aus dem Vorstehenden ergibt, kann das geschilderte Mess-Gerät für Bohrungen 27, 28 in Extrudern verwendet werden, die beliebig unterschiedliche Bohrungs-Durchmesser bzw. Achs-Abstände aufweisen. Es müssen jeweils nur wenige Teile ausgewechselt werden.

Für jede beliebige Baugröße eines Extruders innerhalb bestimmter Baugrößen-Bereiche, d. h. für jeden in diesen Bereich fallenden beliebigen Bohrungs-Durchmesser e, f und für jeden beliebigen Achs-Abstand g sind folgende Bauteile identisch:
- Antriebs-Modul 1 mit Ausnahme der Antriebs-Achsen 7 und der Antriebs-Räder 8
- Führungs-Modul 2 mit Ausnahme der Vorder-Achsen 11 und der Führungs-Räder 12
- Sensor-Modul 3 mit Ausnahme der Tragrohre 17, der Wellen 18 und der Schwenkarme 20, 21.

Für jede Extruder-Baugröße innerhalb des erwähnten Baugrößen-Bereichs mit gleichem Achs-Abstand g, aber unterschiedlichem Bohrungs-Durchmesser e, f (s. Fig. 3 und 4) sind zusätzlich noch folgende Bauteile identisch:
- Verbindungs-Teile 22, 23
- Tragrohre 17 und Wellen 18.

Damit die Schwenk-Achsen der Schwenk-Arme jeweils identisch mit den Bohrungs-Achsen 30, 31 der Gehäuse-Bohrungen 27, 28 zusammenfallen, müssen die Achsen 7 und 11 einen konstanten vertikalen Abstand j zu einer durch die Bohrungs-Achsen 30, 31 aufgespannten horizontalen MittelEbene 38 aufweisen. Entsprechend sind die Räder 8, 12 jeweils zu wählen.

## Patentansprüche

1. Mess-Gerät zur Erfassung des Verschleiß-Zustandes der Bohrungs-Wände (35, 36) von zwei einander durchdringenden, zueinander parallele Bohrungs-Achsen (30, 31) aufweisenden Gehäuse-Bohrungen (27, 28) von mindestens zweiwelligen Schnecken-Extrudern, das einen Wagen aufweist,
- mit hinteren Antriebs-Rädern (8), die
-- von einer Antriebs-Einheit (4) antreibbar,
-- an längenveränderbaren Antriebs-Achsen (7) angeordnet und
-- auswechselbar sind,
- mit vorderen Führungs-Rädern (12), die
-- an längenveränderbaren Vorder-Achsen (11) angeordnet und
-- auswechselbar sind
und
- mit berührungslos arbeitenden Abstands-Sensoren (21, 21'), die
-- jeweils um eine jeweilige Schwenk-Achse schwenkantreibbar sind, wobei die Schwenk-Achsen parallel zueinander und im Abstand voneinander angeordnet sind,
und
-- zur Lokalisierung im Abstand zur jeweiligen Bohrungs-Wand (35, 36) an um die jeweilige Schwenk-Achse schwenkbaren, längenveränderbaren Schwenk-Armen (20, 20') angeordnet sind.

2. Mess-Gerät nach Anspruch 1, **dadurch gekennzeichnet,**
**dass** der Wagen aus Modulen (1, 2, 3) aufgebaut ist.

3. Mess-Gerät nach Anspruch 2, **dadurch gekennzeichnet,**
**dass** der Wagen aus einem Antriebs-Modul (1) mit den Antriebs-Rädern (8), einem Führungs-Modul (2) mit den Führungs-Rädern (12) und einem Sensor-Modul (3) mit den Abstands-Sensoren (21, 21') aufgebaut ist.

4. Mess-Gerät nach Anspruch 1, **dadurch gekennzeichnet,**
**dass** die Schwenkarme (20, 20') jeweils an einem Winkel-Getriebe (19) angeordnet sind, das über eine längenveränderbare Welle (18) mit einem gemeinsamen Schwenk-Antrieb (15) verbunden ist.

5. Mess-Gerät nach Anspruch 2 oder 3, **dadurch gekennzeichnet,**
**dass** der Abstand der Module (1, 2, 3) veränderbar ist.

6. Mess-Gerät nach einem der Ansprüche 1 bis 5, **dadurch gekennzeichnet,**
**dass** die Führungs-Räder (12) schräg angestellten Sturz oder Spur aufweisen.

7. Mess-Gerät nach einem der Ansprüche 1 bis 6, **dadurch gekennzeichnet,**
**dass** den Antriebs-Rädern (8) eine Weg-Mess-Einrichtung (9) zugeordnet ist.

8. Mess-Gerät nach einem der Ansprüche 1 bis 7, **dadurch gekennzeichnet,**
**dass** den Abstands-Sensoren (21, 21') ein ihre Winkelstellung erfassender Positions-Geber (37) zugeordnet ist.

## Claims

1. Measuring device for detecting the state of wear of the bore walls (35, 36) of two interpenetrating housing bores (27, 28), having parallel bore axes (30, 31), of at least two-shaft screw extruders, which device has a carriage,
- with rear drive wheels (8),
-- which are drivable by a drive unit (4),
-- which are arranged on drive axles (7), the length of which is variable, and
-- which are exchangeable,
- with front guide wheels (12),
-- which are arranged on front axles (11), the length of which is variable, and
-- which are exchangeable,
and
- with contactlessly operating distance sensors (21, 21'),
-- which each are pivotally drivable about a respective pivot axis , wherein the pivot axles are arranged parallel to each other and at a distance from one another,
and
-- for location purposes, are positionable at a distance from the respective bore wall (35, 36) on pivot arms (20, 20') which are pivotable about a bore axis (30, 31) and the length of which is variable.

2. Measuring device according to claim 1, **characterised in that** the carriage comprises modules (1, 2, 3).

3. Measuring device according to claim 2, **characterised in that** the carriage comprises a drive module (1) with the drive wheels (8), a guide module (2) with the guide wheels (12) and a sensor module (3) with the distance sensors (21, 21').

4. Measuring device according to claim 1, **characterised** # in that the pivot arms (20, 20') are each arranged on an angular gear (19) connected to a common pivot drive (15) via a shaft (18), the length of which is variable.

5. Measuring device according to claim 2 or 3, **characterised in that** the distance between the modules (1, 2, 3) is variable.

6. Measuring device according to any one of claims 1 to 5, **characterised in that** the front guide wheels (12) have an oblique camber or track.

7. Measuring device according to any one of claims 1 to 6, **characterised in that** a distance measuring means (9) is associated with the drive wheels (8).

8. Measuring device according to any one of claims 1 to 7, **characterised in that** associated with the distance sensors (21, 21') is a position transmitter (37) detecting an angular position thereof.

## Revendications

1. Appareil de mesure pour la saisie de l'état d'usure des parois (35, 36) de deux alésages de carter (27, 28), pourvus d'axes d'alésage (30, 31) s'intersectant et parallèles l'un à l'autre, d'extrudeuses à vis sans fin ayant au moins deux arbres, lequel comporte un chariot
- avec des roues d'entraînement arrière (8), qui sont
-- entraînables par une unité d'entraînement (4),
-- disposées sur des axes d'entraînement (7) de longueur variable, et qui sont
-- renouvelables
- avec des roues de guidage avant (12), qui sont
-- disposées sur des axes avant (11) de longueur variable, et qui sont
-- renouvelables
et
- avec des capteurs de distance fonctionnant sans contact (21, 21'), qui sont
-- entraînables en pivotement chacun autour d'un axe de pivotement respectif, les axes de pivotement étant parallèles l'un à l'autre et espacés l'un de l'autre,
et qui
-- pour la localisation à intervalle de la paroi d'alésage respective (35, 36), sont disposés sur des bras pivotants (20, 20') de longueur variable, pivotant autour des axes de pivotement correspondants.

2. Appareil de mesure selon la revendication 1, **caractérisé**
**en ce que** le chariot est constitué de modules (1, 2, 3).

3. Appareil de mesure selon la revendication 2, **caractérisé**
**en ce que** le chariot est constitué d'un module d'entraînement (1) avec les roues d'entraînement (8), d'un module de guidage (2) avec les roues de guidage (12), et d'un module de capteur (3) avec les capteurs de distance (21, 21').

4. Appareil de mesure selon la revendication 1, **caractérisé**
**en ce que** les bras pivotants (20, 20') sont disposés chacun sur un engrenage d'équerre (19) respectif relié à un entraînement de pivotement (15) commun par un arbre (18) de longueur variable.

5. Appareil de mesure selon la revendication 1, **caractérisé**
**en ce que** la distance entre les modules (1, 2, 3) est variable.

6. Appareil de mesure selon l'une des revendications 1 à 5, **caractérisé**
**en ce que** les roues de guidage (12) présentent une écuanteur ou un alignement ajustés avec une inclinaison.

7. Appareil de mesure selon l'une des revendications 1 à 6, **caractérisé**
**en ce qu'**un dispositif de mesure de course (9) est affecté aux roues d'entraînement (8).

8. Appareil de mesure selon l'une des revendications 1 à 7, **caractérisé**
**en ce qu'**un capteur de position (37) saisissant la position angulaire des capteurs de distance (21, 21') est affecté à ceux-ci.
